# EUROPÄISCHE PATENTANMELDUNG

(11) **EP 2 839 753 A1**
(43) Veröffentlichungstag der Anmeldung: **25.02.2015**
(21) Anmeldenummer: 13181021.0
(22) Anmeldetag: 20.08.2013
(51) Int. Cl.: A23L 3/365

(54) **Verfahren und Vorrichtung zum Auftauen von Lebensmitteln, insbesondere Fisch, Fleisch, Geflügel und Früchten**

(71) Anmelder: Verein zur Förderung des Technologietransfers an der Hochschule Bremerhaven e.V., 27572 Bremen (DE)
(72) Erfinder: von Bargen, Markus, 27574 Bremerhaven (DE); Ringer, Linda, 27568 Bremerhaven (DE); Lösche, Klaus, 27580 Bremerhaven (DE)
(74) Vertreter: Meinke, Dabringhaus und Partner GbR

(57) **Zusammenfassung**

Ein Verfahren sowie eine Vorrichtung zum Auftauen von Lebensmitteln (4), insbesondere Fisch, Fleisch, Geflügel, Gemüse und Früchten, soll in kürzerer Zeit zu besseren Ergebnissen führen und gegenüber bekannten Verfahren teilweise auch noch Energie einsparen.

Dies wird verfahrensmäßig dadurch erreicht, dass in eine Klimakammer (1) während des Auftauens Aerosol (2) auf Wasserbasis eingeleitet wird und das Aerosol (2) eine Wassertröpfchengröße von < 1 µm bis 100 µm, insbesondere zwischen 0,1 µm und 20 µm, aufweist.

## Beschreibung

Die Erfindung betrifft ein Verfahren sowie eine Vorrichtung zum Auftauen von Lebensmitteln, insbesondere von Fisch, Fleisch, Geflügel, Gemüse und/oder Früchten. Das Auftauen von gefrorenen Lebensmitteln stellt einen kritischen Vorgang in der gesamten Prozesskette der Be- und Verarbeitung entsprechender Produkte, wie beispielsweise Fisch, Fleisch, Geflügel und/oder Früchten und Gemüse dar.

So müssen auf hoher See gefrostete Fische, und zwar sowohl große als auch kleine Fische, als auch Fischfilets, ebenso wie vorgeformte, mehr oder weniger geometrisch ausgebildete Fischblöcke vor einer Weiterverarbeitung, spätestens aber vor dem Verzehr aufgetaut werden. Gleiches gilt für gefrorenes Fleisch, wie etwa Hackfleisch für die Herstellung von Frikadellen.

Auch gefrorenes Fruchtmaterial, wie z.B. Erdbeeren, muss vor einer industriellen Weiterverarbeitung, etwa zu Konfitüre oder Fruchtzubereitungen für Joghurts und anderes, mehr oder weniger vollständig aufgetaut werden.

Ebenfalls können gefrostete Teiglinge (z.B. Baguette), Tiefkühl-Teigwaren (Pizza und Pasta) oder Tiefkühl-Backwaren (Brötchen, Laugengebäck, Pizza) durch einen vorgeschalteten Auftauvorgang besser auf die Weiterverarbeitung oder den raschen Verzehr vorbereitet werden.

Mit all diesen Vorgängen ist ein relativ hoher Energieaufwand verbunden, beispielsweise um die Wassereiskristalle in den Tiefkühl-Lebensmitteln zum Schmelzen zu bringen (sog. Schmelzenthalpie). Andererseits ist die Wärmeleitfähigkeit gefrosteter Produkte begrenzt, da die Wasseraktivität relativ klein ist.

Darüber hinaus besteht die Gefahr einer mikrobiellen Kontamination während des Auftauvorganges. Bekannte Auftauverfahren setzen daher hohe Anforderungen an die Hygienemaßnahmen und ein entsprechendes Risikomanagement im Verarbeitungsbetrieb voraus.

Es ist bekannt, dass beim Einfrieren die Eiskristallbildung und -struktur beeinflusst und die gesamte Lebensmittelmatrix nachteilig verändert werden kann, z.B. durch eine Desintegration der Zellstrukturen. Beim Auftauvorgang können ähnliche Störfaktoren auftreten. Sie können zum übermäßigen Verlust von Zellwasser mit damit verbundenem erhöhtem Abtropfverlust führen. Das Ergebnis sind relativ strohige Materialeigenschaften, insbesondere bei Fischen und Fleischprodukten. So zeigen etwa einfach gefrostete Fischprodukte einen Masseverlust von ca. 3 % nach dem Auftauen (Abtropfgewicht). Doppelt gefrostete Fischprodukte weisen sogar Verluste von ca. 10 % (Abtropfgewicht) auf. Bei einer Tonne gefrorenem Fisch können daher bis zu 100 kg Verlust auftreten.

Die Lebensmittel verlieren gleichzeitig wesentliche Frischequalitätsmerkmale. Sie sind geschrumpft, in der Farbe unnatürlich verändert, durch strohige Materialeigenschaften charakterisiert, und zwar aufgrund von Wasserwanderungen, und weisen einen verminderten Geschmack sowie einen atypischen Geruch auf. Sie riechen mehr oder weniger "leer". Die Erzeugnisse weisen darüber hinaus regelmäßig eine erhöhte und unerwünschte mikrobielle Gesamtkeim-Belastung auf. Derartige Verderbniserreger sind naturgemäß äußerst unerwünscht. Auch die Enzymaktivitäten können unerwünschte Größenordnungen erreichen. Damit ist die Gefahr von nutritiven oder auch Konsistenzverlusten verbunden.

Je höher die Auftautemperaturen sind, umso höher ist die Gefahr des mikrobiellen Wachstums. Damit sind auch zum Teil deutlich verminderte Haltbarkeiten bei den aus den aufgetauten Produkten hergestellten Endprodukten verbunden.

Überraschenderweise hat sich außerdem herausgestellt, dass der Masseverlust umso größer ist, je höher die Auftauraten eingestellt sind. Dies findet seine Erklärung darin, dass Muskeleiweiß eine zu geringe Sorptionsfähigkeit aufweist.

Umgekehrt ist eine Verlangsamung des Auftauprozesses nicht tolerierbar, da die beschriebenen nachteiligen Produkteigenschaften dann verstärkt auftreten.

So wird Fisch nach dem Fang aus qualitativen Gründen sehr rasch vor dem sogenannten "rigor mortis" gefrostet. Ein langsamer Auftauvorgang kann den sogenannten "Auftau rigor" verursachen (insbesondere bei höheren Auftautemperaturen), der eine Desintegration der Muskelfasern verursacht und qualitativ unerwünschte Effekte bewirkt, so insbesondere eine Verfestigung und Strohigkeit des Fisches.

Der einzige Weg, dies zu vermeiden, ist bislang das Auftauen unter ausgesprochen langsamen Bedingungen, insbesondere bei Raumtemperatur. Im Gegensatz zu porösen und gefrorenen Körpern, wie etwa gasdurchsetzten Körpern, z.B. gegorene Teigen, Brötchen-Teiglingen und dgl., die vergleichsweise sehr rasche Auftauraten aufweisen, und zwar aufgrund primär konvektiver und konduktiver Wärmetransportmechanismen, zeigen nicht poröse Körper, wie Fleisch, Fisch aber auch Früchte primär nur konduktive Wärmetransportmechanismen, die einen relativ langsamen Auftauprozess bedingen.

Damit sind bei den nicht gasdurchsetzten gefrorenen Körpern, wie Fleisch, Fisch, Pasta und Früchten die Auftauraten besonders kritisch und führen einerseits zu unerwünschten qualitativen Ergebnissen, wie sie auch einen relativ hohen Energie- und Kostenaufwand erfordern.

Dabei ist weiter zu berücksichtigen, dass der Auftauvorgang prinzipiell von außen nach innen verläuft. Mit fortschreitendem Auftauvorgang muss die Wärme also durch die jeweils bereits aufgetaute Matrix geführt werden. Die Auftaurate verläuft dabei umso langsamer, je weiter dieser Prozess fortschreitet, da die Wärmeleitfähigkeit bei aufgetautem Material geringer ist, als bei gefrorenem Material. Im Ergebnis muss aber gefrostetes Material zumindest auf Temperaturen aufgetaut werden, die je nach Art des Materials etwa -1°C bei Fisch, Fleisch und Früchten und -3°C bis -5°C bei Teiglingen betragen. Die Eiskristallbildung ist von Produkt zu Produkt unterschiedlich.

Die Auftaurate und die Auftauzeiten sind daher von verschiedenen Faktoren abhängig. Zu nennen sind besonders die Art des Auftauverfahrens, die Art und Dicke des Produktes und die Art und die Bedingungen des Wärmetransportes.

Bislang werden gefrorene Lebensmittel sowohl diskontinuierlich (batch) als auch kontinuierlich aufgetaut. Dabei werden in der Regel Temperaturen, etwa bei Fleisch- und Fischprodukten, von nicht höher als + 6°C eingehalten. In Einzelfällen wird auch Dampf und /oder heißes Wasser als Wärmeübertragungsmedium eingesetzt. In solchen Fällen müssen die Anlagen besonders einwandfrei arbeiten, um keine hygienischen Probleme zu erzeugen. Insbesondere müssen sie leicht desinfizierbar sein.

Auch bewegte Luft kann den Wärmetransport durch Konvektion beschleunigen. Dabei treten aber Desorptionsvorgänge verstärkt auf. Deshalb wird auch durch befeuchtete und erwärmte Luft, in der Regel Dampf, der Wärme- und Stofftransport zu erhöhen. Empfindliche Produkte können darunter aber durch den sogenannten "pre-cooked-Effekt" leiden und gleichermaßen verstärkt desorbieren, also Wasserverlust erleiden.

Tiefkühl-Teiglinge werden auch bei Raumtemperatur aufgetaut. Das Problem der Kondensation führt zu qualitativen Nachteilen. Tiefkühl-Backwaren werden wiederum auch unter Verwendung von Dampf, allerdings energetisch aufwendig, aufgetaut.

Eines der einfachsten Verfahren im Stand der Technik stellt es dar, Tiefkühl-Produkte, insbesondere Fisch und Fleisch in Wasserbäder zu tauchen, häufig über Nacht oder mehrere Stunden, oder sie mit erwärmtem Wasser im "Sprinkler-Verfahren" zu besprühen.

So wird in der US 2004/0066835 A1 das Einsprühen von Wasserdampf mit einer Temperatur von 80°C vorgeschlagen. Das US-Patent 4,898,741 schlägt ein Auftauverfahren bei einer definierten Umgebungsfeuchte und einer maximalen Luftbewegung von 5 m/sec vor, während die US 2003/01086555 A1 ein Verfahren zur Vermeidung von Gefrierdenaturation durch ein Flüssigkeitsadditiv vorsieht.

Diese Verfahren führen jedoch, vor allem bei Filets, zu nachteiligen Veränderungen in Textur und Aroma. Tauchverfahren führen zu einer Verunreinigung des Wassers durch Blut, Schleime, Zellwasser und Mikroorganismen. Es muss daher in der Regel stets frisches Wasser verwendet werden. Das Durchflussverfahren ist entsprechend ressourcenverschleißend. Alternativ müssen aufwendige Wasseraufbereitungsverfahren angewendet werden. Diese müssen zuverlässig sein, da ansonsten das Problem einer Kontamination der gesamten Charge besteht, auch wenn die Kontamination möglicherweise nur von einem einzigen Tiefkühl-Block ausgeht. Normalerweise arbeitet man bei Tiefkühl-Fisch mit 3 bis 4 Liter Wasser bezogen auf ein Kilogramm Tiefkühl-Fisch im Durchflussverfahren.

So ist aus der US 4,464,401 ein Schnellauftauverfahren bekannt, bei dem das Gefriergut in ein Wasserbad mit einer Höchsttemperatur von 18 °C gebracht wird und anschließend einem Schalldruck von maximal 6 Watt und einer Frequenz gleich der Frequenz des kristallisierten Eises in dem Gefriergut unterhalb von 10 KHz ausgesetzt wird. Die Verfahren sind schwer zu kontrollieren und zu beherrschen. Reproduzierbare Qualitäten sind selten zu erreichen.

Die bereits beschriebenen "Sprinkler-Systeme" arbeiten günstiger, da sie kontinuierlich arbeiten können und besser beherrschbare Prozesse darstellen. Auch der Wasserverbrauch ist vergleichsweise gering und die Gefahr einer Rekontamination deutlich geringer.

Auch die Anwendung von hochfrequenter Spannung wird als Auftauverfahren für Tiefkühl-Ware, insbesondere Fleisch und Fisch beschrieben. So beispielsweise in der US 2008/0305222 A1 und der US 2008/0271730 A1. Die Produkte werden dabei zwischen zwei parallelen Metall-Platten behandelt. Bei entsprechend hohen Spannungen beginnt der Schmelzvorgang, der dann relativ rasch vor sich geht.

Nachteilig ist dabei der relativ hohe elektrische Energiebedarf. Auch bestehen die allgemeinen Risiken, die sich aus dem Einsatz hochfrequenter Spannung ergeben.

Auch kann eine lokale Überhitzung eintreten, die ein unregelmäßiges Auftauen und eine unregelmäßige Qualität, z.B. bei gefrorenen Fischblöcken, ergibt. Alternativ werden auch Vakuum-Tauverfahren genutzt, etwa in Kammern mit zum Teil 10 bis 12 Tonnen Fassungsvermögen. Das Vakuum senkt den Siedepunkt und nutzt die Verdampfungsenthalpie (Verdunstungsenthalpie), so dass verdampftes Wasser an der vereisten Oberfläche der Tiefkühl-Ware den Schmelzvorgang einleitet und durchführt. Dabei wird die Kondensationsenergie genutzt. Je dicker die Tiefkühl-Ware, also beispielsweise der Fischblock ist, umso länger ist der Auftauvorgang.

Im Haushaltsbereich wird die Mikrowellentechnik eingesetzt, um Tiefkühl-Lebensmittel aufzutauen. Durch das dielektrische Erhitzen kann jedoch kaum gefrorenes Wasser aufgetaut werde, da die Wassermoleküle in Eiskristallgittern fixiert vorliegen. Es bedarf erst eines normalen Auftauvorganges, bei dem freies, geschmolzenes Wasser vorliegt, das anschließend von der Mikrowellenenergie erhitzt werden kann, um so das Tiefkühl-Lebensmittel aufzutauen.

Dabei ist nach wie vor das Problem von sogenannten "hot-spots" ungelöst. Das Verfahren ist nach wie vor sehr schwer beherrschbar, so dass eine einheitliche und gute Qualität nicht erzeugt werden kann.

Während in Europa Mikrowellenöfen mit einer elektromagnetischen Strahlung von 2,455 GHz eingesetzt werden, verwendet man in anderen Ländern, beispielsweise in den Vereinigten Staaten von Amerika, für industrielle Anwendungen Mikrowellengeräte mit einer elektromagnetischen Strahlung von 915 MHz. Beide Frequenzen weisen Vor- und Nachteile auf. Prinzipiell ist die geringere Frequenz besser für eine entsprechende Eindringtiefe geeignet, gleichzeitig wird aber auch die Adsorption geringer.

Bei höheren Frequenzen verringert sich umgekehrt die Eindringtiefe in das Tiefkühl-Produkt, es treten ebenfalls "hot-spots" und unregelmäßige Qualitäten analog zu den bereits beschriebenen Mikrowellengeräten auf. Der Energieaufwand ist hoch.

Aus diesem Grunde werden industrielle Auftauanlagen mit Radiowellen genutzt, die relativ geringe Frequenzen aufweisen. Ihr Arbeitsprinzip ähnelt denen von Mikrowellengeräten. Es gibt Anlagen, die im Batch-Betrieb mit 40 bis 600 kg/Std. oder kontinuierlich mit 900 bis 3000 kg/Std. arbeiten.

Des Weiteren sind klimatechnische Lösungen bekannt, mit denen Wasser in eine Auftaukammer verdüst oder alternativ Dampf in den entsprechenden Kammern verteilt wird. Die Feuchte und Temperatur werden konstant kontrolliert, so dass definierte Bedingungen eingehalten werden können. Das Ergebnis ähnelt den durch das Vakuumverfahren erzielten Ergebnissen, ohne dass teure Vakuumpumpen eingesetzt werden müssen.

Aus der deutschen Patentschrift DE 100 51 951 C1 geht ein Verfahren zum Auftauen von in Stücken in einem Auftauraum gelagerten gefrorenen Fleischwaren, insbesondere Fleischstücken hervor, bei dem die Kerntemperatur im Innern eines Probestücks und die Oberflächentemperatur des Probestücks gemessen, im Auftauraum ein Wassernebel erzeugt und der Auftauraum während einer Folge von Heizintervallen beheizt wird, welche durch Ruheintervalle getrennt sind, und der Auftauvorgang in Abhängigkeit der gemessen Kerntemperatur gemessen wird. Auftaueffekte werden ebenfalls durch den Einsatz von Hochdruck, z.B. 200 MPa, erzielt. In Abhängigkeit vom Druck kann die Eiskristallbildung bis -21 °C unterbunden werden. Jedoch befindet sich der Einsatz derartiger Verfahren noch im Versuchsbetrieb; eine industrielle Anwendung hat noch nicht stattgefunden. Im Fall von gefrorenen Thunfisch-Blöcken können diese innerhalb von nur 30 bis 60 Minuten aufgetaut werden, wenn unter Druckbedingungen von 50 bis 150 MPa gearbeitet wird. Hierbei wurden allerdings auch schon Nebeneffekte beobachtet, die vor allem in einer unerwünschten Entfärbung des roten Fleisches bestehen, das rosa wird. Auch bei Surimi (Formfisch) wurde Ähnliches beobachtet, außerdem treten hierbei Proteindenaturierungen auf.

Aufgrund des beschriebenen Standes der Technik und der damit verbundenen Nachteile, hat es sich die vorliegende Erfindung zur Aufgabe gemacht, ein vorteilhaftes Verfahren zum Auftauen von Lebensmitteln, insbesondere Fisch, Fleisch, Geflügel, Gemüse und Früchten vorzuschlagen, das in kürzerer Zeit zu besseren Ergebnissen führt und gegenüber bekannten Verfahren teilweise auch noch Energie einspart.

Dies gelingt gemäß der Erfindung dadurch, dass in eine Klimakammer während des Auftauens Aerosol eingeleitet wird.

Die Generierung von Aerosol geschieht durch die Ablösung von Kleinsttröpfchen von einer Wasseroberfläche dadurch, dass unter der Wasseroberfläche ein piezokeramischer Wandler unter Ultraschallfrequenz in Schwingung versetzt wird. Die dadurch bewirkte höhere Umgebungsfeuchte bewirkt einen beschleunigten Wärmeübergang und Wärmedurchgang in bzw. durch das gefrorene Lebensmittel. Hieraus resultieren stark beschleunigte Auftauraten. Die Auftauzeit kann bis zu 30 % reduziert werden. Durch die Aerosole kann die Umgebungsfeuchte in Klimakammern auf Werte von bis zu 100 % relativer Feuchte angehoben werden, ohne dass irgendeine nennenswerte Kondensation eintritt. Bei relativen Umgebungsfeuchten von 98 % oder höher findet keine unerwünschte Austrocknung des Lebensmittels statt. Vielmehr behält dieses seine wertgebenden Eigenschaften, wie etwa den natürlichen Wassergehalt, seine Textur, Konsistenz, Farbe, Aroma und Geschmack. Jegliche Desorption wird vermieden.

Mit herkömmlichen Prozessen werden lediglich Luftfeuchtigkeiten um 80 % erreicht. Dies führt während des Auftauprozesses zu Austrocknungen der Oberfläche. Mittels des vorgeschlagenen Verfahrens werden bis zu 99 % Luftfeuchtigkeit erreicht. Dadurch kann der Auftauprozess beschleunigt werden, gleichzeitig führt dies zu besseren Produktqualitäten ohne Austrocknungserscheinungen. Die Aufrechterhaltung hoher Umgebungsfeuchten, z.B. 98 % relative Feuchte, gewährleistet eine erhöhte Gleichgewichtsfeuchte zwischen Produkt und Umgebung, die höher ist als der Dampfdruck des Lebensmittels selbst, so dass keine oder fast keine Desorptionserscheinungen eintreten (verminderter Masseverlust).

Um dieses Ergebnis zu erzielen, sind kleinste Wassertröpfchengrößen, insbesondere von < 1 µm bis 100 µm, erforderlich. Derartige Aerosole können insbesondere durch den Einsatz von Ultraschall, insbesondere durch piezokeramische Wandler erzeugt werden. Auch eine elektromagnetische Anregung ist möglich. Idealerweise werden die Wassertröpfchen in eine Art Schwebezustand versetzt. Auch durch Verdüsen mit Hochdruckdüsen können Aerosole ebenfalls erzeugt werden.

Je nach Temperatur des zerstäubten Wassers bilden sich mehr oder weniger kalte oder warme Aerosole. Wärmere Aerosole ergeben in Abhängigkeit von der verwendeten Ultraschall-Frequenz die Generierung von sehr kleinen Tröpfchen, mit Durchmessern von <1 µm bis z.B. 10 oder 20 µm durch piezokeramische Wandler. Derartige Aerosole haben eine sehr hohe Verdriftungsneigung, die Sedimentationsrate ist sehr klein und bei Tröpfchengrößen unterhalb von 5 µm nahezu null.

Die Aerosole weisen keine Neigung zu Kondensation auf, da das Wasser bei den Aerosolen bereits flüssig ist.

Mit den sehr kleinen Tröpfchen kann eine 100 %-ige relative Luftfeuchtigkeit realisiert werden. Dadurch entsteht ein erheblich verbesserter Wärmetransport bzw. -übergang. Das Wasser wird mechanisch in Kleinsttröpfchen zerlegt, z.B. in nur 5 µm große Tröpfchen. Dabei muss keine Verdampfungsenergie aufgewendet werden, vielmehr ist die Herstellung von Aerosolen mit geringem Energieeinsatz und niedrigen Kosten verbunden. Im Gegensatz zum Einsatz von Dampf, der beim Auftreffen auf kalte Körper, wie z.B. "frozen fish" die sofortige Kondensation und Freisetzung von zuvor hineingesteckter Energie, sog. Kondensationswärme, bewirkt, führt der Einsatz von Aerosolen, der auch als Nebel oder Kaltnebel beschrieben werden kann, zu sehr viel besseren Ergebnissen.

Diese Nebel bzw. Aerosole können auch über eine Düsenvernebelung produziert werden. Hierfür benötigt man extrem hohe Drücke von z.B. 50 bar und entsprechend konfigurierte Düsen. Damit können vergleichbare Aerosoltröpfchen hergestellt werden, ebenso wie die, die mit Ultraschall generiert werden.

Die Aufrechterhaltung der so erzielten hohen Umgebungsfeuchte gewährleistete eine erhöhte Gleichgewichtsfeuchte zwischen Produkt und Umgebung. Diese ist höher als der Dampfdruck des Lebensmittels selbst. Es treten so gut wie keine Desorptionserscheinungen auf. Der Masseverlust ist stark vermindert. Auch die Produkteigenschaften sind erheblich günstiger.

Da eine höhere Umgebungsfeuchte auch einen beschleunigten Wärmeübergang und Wärmedurchgang in das gefrorene Lebensmittel hinein erlauben, resultieren gleichermaßen und vergleichsweise beschleunigte Auftauraten.

Die Anhebung der Umgebungsfeuchte mit Hilfe entsprechender Aerosole in Klimakammern, die dann zusätzlich, z.B. durch Mikrowellen elektromagnetisch angeregt werden, führt zur sofortigen Verdampfung der Wassertröpfchen in der Umgebung und damit zur sofortigen Erhöhung der Temperatur in der Umgebung, so dass über die bekannten Mechanismen des Wärme- und Stofftransportes die Auftauleistung ganz erheblich beschleunigt werden kann. Teilweise ist eine Zeitersparnis von bis zu 50 % gegenüber dem bekannten Stand der Technik erreichbar. Gleichzeitig ist die Qualität der aufgetauten Produkte deutlich besser. Im Idealfall kann zuvor gefrorener Fisch nicht mehr von frischem Fisch unterschieden werden. Sie weisen die gleiche Textur, Konsistenz, Farbe und Geschmack auf.

Damit steht ein Basis-Verfahren zum Auftauen verschiedenster Tiefkühl-Lebensmittel zur Verfügung, das erstmals Qualitäten zugänglich macht, die bisher nicht erreichbar waren.

Dieses Basisverfahren der Nutzung von Aerosolen z.B. in Klimakammern kann auch kombiniert verwendet werden z.B. für die Anwendung elektromagnetischen Wellen wie die der Mikrowelle oder die der Radiowellen. Dadurch können Wärmetransportvorgänge extrem beschleunigt und unerwünschte Stofftransformationen minimiert werden.

Vorteilhaft wird das Aerosol auch elektromagnetisch angeregt, insbesondere in Wellenlängenbereichen von 10⁻³ bis 10⁷ m (Frequenz: 10¹² bis 10 Hz). Dies bietet den Vorteil, dass Schmelz- und Rekristallisationsvorgängen unterdrückt bzw. unterbunden werden und die Lebensmittel-Matrix schonend bearbeitet wird (bessere Qualitätsmerkmale der Produkte).

Weiter ist auch vorgesehen, dass das Lebensmittel und/oder Aerosol durch Schallwellen angeregt wird, insbesondere in Wellenlängenbereichen von 10 bis 10⁻⁷ m (Frequenz: 10 bis 10⁹ Hz). Hiermit verbindet sich der Vorteil, dass der Wärmetransport beschleunigt wird und damit ein Schmelzprozess erleichtert verlaufen kann.

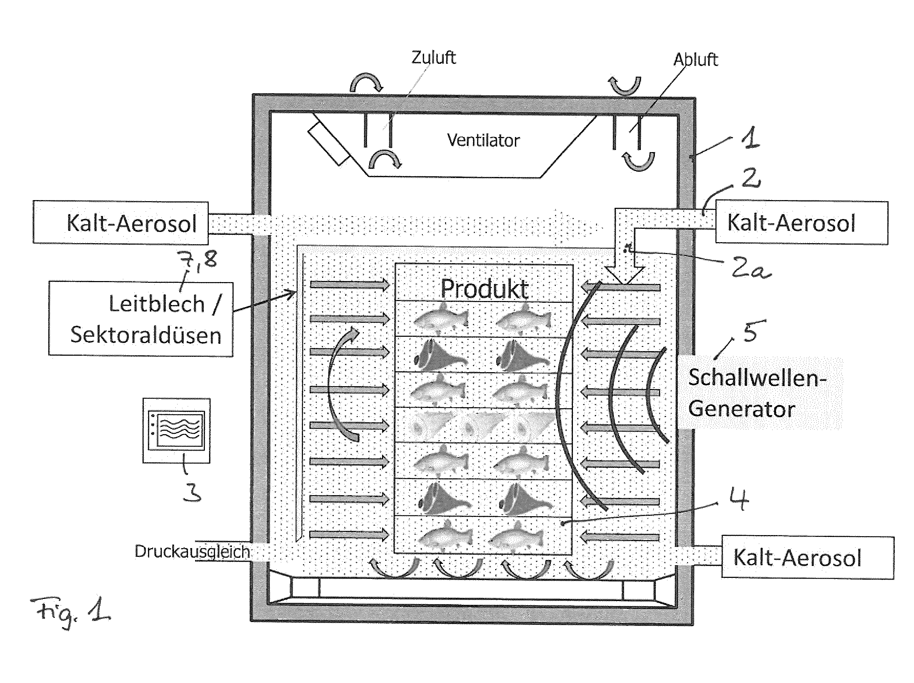

Die Erfindung ist nachstehend anhand der Zeichnung näher erläutert. Diese zeigt in
- Fig. 1: eine Klimakammer,

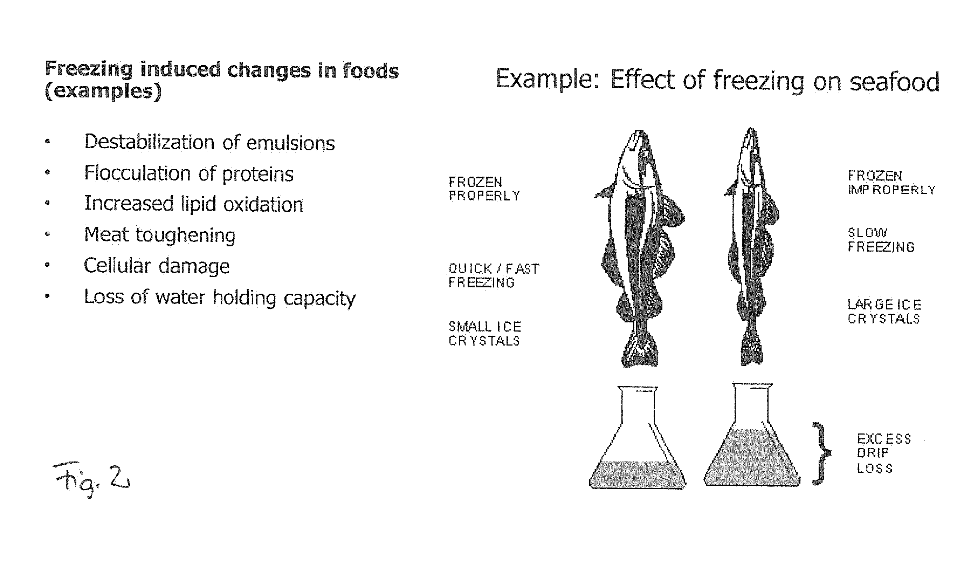

- Fig. 2: eine grafische Übersicht über den Einfriereffekt bei Fischen,

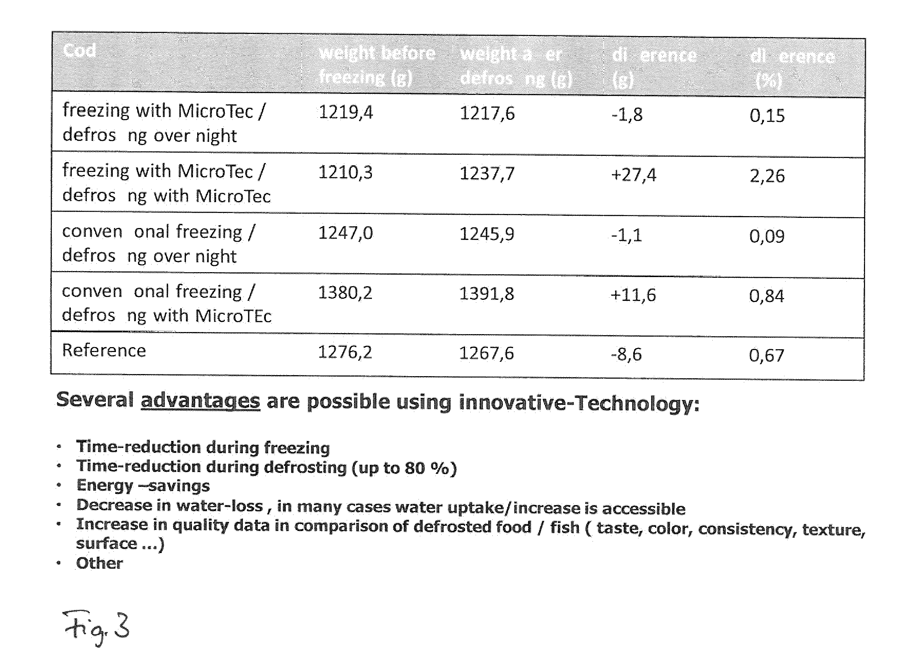

- Fig. 3: eine tabellarische Übersicht über den Gewichtsverlust bei verschiedenen Auftautechnologien sowie in

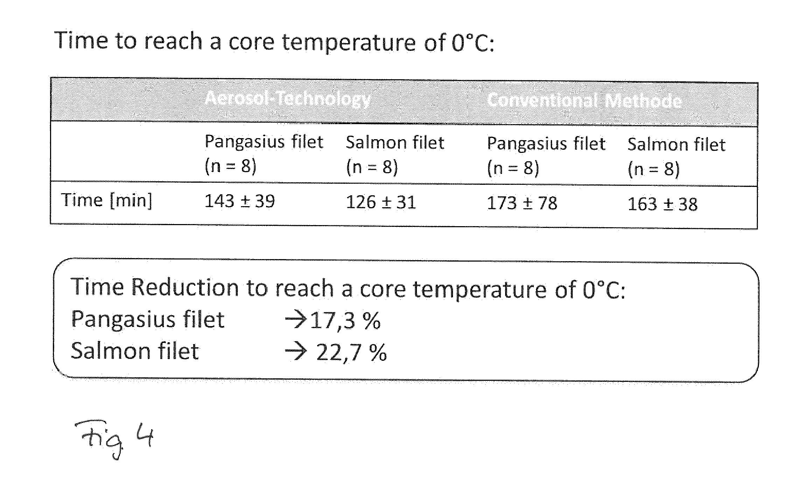

- Fig. 4: eine tabellarische Übersicht des Zeitbedarfs bei verschiedenen Auftautechnologien.

Bei einem Verfahren zum Auftauen von Lebensmitteln, insbesondere Fisch, Fleisch, Geflügel, Gemüse oder Früchten, wird in eine Klimakammer 1 während des Auftauens Aerosol 2 eingeleitet. Dabei kann die Wassertröpfchengröße von < 1 µm bis 100 µm, insbesondere zwischen 0,1 µm und 20 µm, betragen. Die Wassertröpfchen 2a werden vorteilhaft in einen Schwebezustand versetzt, die relative Feuchte der Umgebungsluft wird auf nahezu 90% bis 99 % eingestellt.

Das Aerosol 2 wird durch eine dafür geeignete Anregeeinrichtung 3 elektromagnetisch angeregt, insbesondere in Wellenlängenbereichen von 10⁻³ bis 10⁷ m (Frequenz: 10¹² bis 10 Hz).

Das Lebensmittel 4 wird durch Schallwellen angeregt, insbesondere in Wellenlängenbereichen von 10 bis 10⁻⁷ m (Frequenz: 10 bis 10⁹ Hz). Das Aerosol 2 weist eine Temperatur von 0° bis 50°, insbesondere von 4° bis 15° C auf, während die Umgebungstemperaturen im Bereich von -5° bis 60° C, insbesondere zwischen 0° bis 15° C liegen.

Das Aerosol 2 kann auch durch geeignete andere Einrichtungen 5, insbesondere eine Ultraschallvernebelung oder eine Düsenvernebelung erzeugt werden. Ebenso können in der Klimakammer 1 Sektoraldüsen 7 und/oder Leitbleche 8 zum gelenkten Eintrag des Aerosols 2 in die Klimakammer 1 vorgesehen sein.

## Patentansprüche

1. Verfahren zum Auftauen von Lebensmitteln (4), insbesondere Fisch, Fleisch, Geflügel, Gemüse und Früchten,
**dadurch gekennzeichnet,**
**dass** in eine Klimakammer (1) während des Auftauens Aerosol (2) auf Wasserbasis eingeleitet wird und das Aerosol (2) eine Wassertröpfchengröße von < 1 µm bis 100 µm, insbesondere zwischen 0,1 µm und 20 µm, aufweist.

2. Verfahren nach Anspruch 1,
**dadurch gekennzeichnet,**
**dass** die Wassertröpfchen (2a) in einen Schwebezustand versetzt werden.

3. Verfahren nach Anspruch 1 oder 2,
**dadurch gekennzeichnet,**
**dass** eine relative Feuchte der Umgebungsluft auf nahezu 90% bis 99% eingestellt wird.

4. Verfahren nach einem oder mehreren der Ansprüche 1 bis 3,
**dadurch gekennzeichnet,**
**dass** das Aerosol (2) elektromagnetisch angeregt wird, insbesondere in Wellenlängenbereichen von 10⁻³ bis 10⁷ m (Frequenz 10¹² bis 10 Hz).

5. Verfahren nach einem oder mehreren der Ansprüche 1 bis 4,
**dadurch gekennzeichnet,**
**dass** das Lebensmittel (4) und/oder Aerosol durch Schallwellen angeregt wird, insbesondere in Wellenlängenbereichen von 10 bis 10⁻⁷ m (Frequenz: 10 bis 10⁹ Hz).

6. Verfahren nach einem oder mehreren der Ansprüche 1 bis 5,
**dadurch gekennzeichnet,**
**dass** das Aerosol (2) eine Temperatur von 0°C bis 50° C, insbesondere von 4°C bis 15°C aufweist.

7. Verfahren nach einem oder mehreren der Ansprüche 1 bis 6,
**dadurch gekennzeichnet,**
**dass** die Umgebungstemperaturen im Bereich von -5°C bis 60°C, insbesondere zwischen 0°C bis 15°C, liegen.

8. Verfahren nach einem oder mehreren der Ansprüche 1 bis 7,
**dadurch gekennzeichnet,**
**dass** das Aerosol (2) durch Düsenvernebelung (5) oder Ultraschall erzeugt wird.

9. Vorrichtung zur Durchführung des Verfahrens nach Anspruch 1 und/oder einem der folgenden,
**dadurch gekennzeichnet,**
**dass** in der Klimakammer (1) Sektoraldüsen (7) und/oder Leitbleche (8) zum gelenkten Eintrag des Aerosols (2) in die Klimakammer (1) vorgesehen sind.
